# EUROPEAN PATENT APPLICATION

(11) **EP 4 600 876 A1**
(43) Date of publication of application: **13.08.2025**
(21) Application number: 25156353.2
(22) Date of filing: 06.02.2025
(51) Int. Cl.: G06Q 10/063, G06Q 50/26

(54) **MACHINE LEARNING BASED CARBON EMISSION LIFE CYCLE ASSESSMENT**

(30) Priority: 06.02.2024 US 202463550435 P
(71) Applicant: Services Pétroliers Schlumberger, 75007 Paris (FR); GeoQuest Systems B.V., 2514 JG The Hague (NL)
(72) Inventor: MANIKANI, Sunil, 411014 Pune (IN); GONG, Yuelian, Mount Hawthorn, 6016 (AU); ZHANG, Xu, Beijing (CN); SEABROOK, David, London, SW18 3AG (GB); BULOVA, Marina, London, W5 5ES (GB); DA MATA CECÍLIO, Inês, 75014 Paris (FR)
(74) Representative: Schlumberger Intellectual Property Department

(57) **Abstract**

The embodiments presented herein include systems and methods for machine learning based life cycle assessment (LCA). For example, a method includes receiving a first set of inputs from one or more industry standard organizations, wherein the first set of inputs comprise data relating to LCA of greenhouse gas (GHG) emissions; using a first large language model (LLM) to generate a canonical mapping structure based on the first set of inputs; receiving a second set of inputs from one or more industrial organizations, wherein the second set of inputs comprise activity data relating to one or more industrial activities performed by the one or more industrial organizations; using a second LLM to output a dynamic mapping classifier based on the second set of inputs relative to the canonical mapping structure generated by the first LLM; and generating and presenting a visualization dashboard of outputs from the dynamic mapping classifier.

## Description

### CROSS REFERENCE TO RELATED APPLICATION

This application claims priority to and the benefit of U.S. Provisional Patent Application Serial No. 63/550,435, entitled "Machine-Learning Based Carbon Emission Life Cycle Assessment," filed February 6, 2024, which is hereby incorporated by reference in its entirety for all purposes.

### BACKGROUND

This disclosure relates generally to systems and methods for machine learning based assessment of carbon emissions life cycles.

As hydrocarbons are extracted from hydrocarbon reservoirs via hydrocarbon wells in oil and/or gas fields, the extracted hydrocarbons may be transported to various types of equipment, tanks, processing facilities, and the like via transport vehicles, a network of pipelines, and the like. For example, the hydrocarbons may be extracted from the reservoirs via the hydrocarbon wells and may then be transported, via the network of pipelines, from the wells to various processing stations that may perform various phases of hydrocarbon processing to make the produced hydrocarbons available for use or transport.

The transported hydrocarbons may be processed or refined into suitable hydrocarbon products and ultimately distributed to end consumers. Overall, the hydrocarbon enterprise may be characterized as encompassing upstream, midstream, and downstream stages. At each of these stages, sustainability parameters such as energy, carbon emissions, waste, water, and the like may be consumed or used. As enterprises move towards becoming more sustainable organizations, it may be challenging to track sustainability parameters while simultaneously identifying opportunities for improving sustainability parameters associated with the enterprise.

This section is intended to introduce the reader to various aspects of art that may be related to various aspects of the present techniques, which are described and/or claimed below. This discussion is believed to be helpful in providing the reader with background information to facilitate a better understanding of the various aspects of this disclosure. Accordingly, it should be understood that these statements are to be read in this light, and not as admissions of prior art.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In some embodiments, method may include receiving, via a computing system, enterprise facility data associated with an enterprise. The method may also involve receiving financial data associated the enterprise and greenhouse gas (GHG) emission data associated with the one or more operations. The method then involve generating a sustainability report associated with one or more facility operations of the enterprise based on aggregating the enterprise facility data, the financial data, and the GHG emission data. The method may also include sending the sustainability report to one or more engineering workflow systems that may determine one or more action plans associated with improving one or more sustainability parameters that corresponds to the one or more facility operations. The method may then receive the one or more action plans send one or more commands to one or more devices associated with the one or more facility operations based on the one or more action plans, such that the one or more commands are configured to cause the one or more devices to adjust one or more respective operations.

Various refinements of the features noted above may be made in relation to various aspects of this disclosure. Further features may also be incorporated in these various aspects as well. These refinements and additional features may be made individually or in any combination. For instance, various features discussed below in relation to one or more of the illustrated embodiments may be incorporated into any of the above-described aspects of this disclosure alone or in any combination. The brief summary presented above is intended only to familiarize the reader with certain aspects and contexts of embodiments of this disclosure without limitation to the claimed subject matter.

For clarity and simplicity of description, not all combinations of elements provided in the aspects of the invention recited above have been set forth expressly. Notwithstanding this, the skilled person will directly and unambiguously recognize that unless it is not technically possible, or it is explicitly stated to the contrary, the consistory clauses referring to one aspect of the embodiments described herein are intended to apply mutatis mutandis as optional features of every other aspect of the invention to which those consistory clauses could possibly relate.

### BRIEF DESCRIPTION OF THE DRAWINGS

Various features, aspects, and advantages of this disclosure will become better understood when the following detailed description is read with reference to the accompanying figures in which like characters represent like parts throughout the figures, wherein:
FIG. 1 illustrates a schematic diagram of example hydrocarbon production system that may include operations undertaken by an enterprise to produce, process, and distribute hydrocarbon products, according to one or more embodiments of this disclosure;
FIG. 2 is a block diagram of components that may be part of the sustainability platform system, according to one or more embodiments of this disclosure;
FIG. 3 is a flow chart of a method for generating a life cycle analysis output employing the sustainability platform system of FIG. 2, according to one or more embodiments of this disclosure;
FIG. 4 shows a window depicting a life cycle visualization that may be generated using the method of FIG. 3, according to one or more embodiments of this disclosure;
FIG. 5 shows a window depicting a value chain visualization that may be generated using the method of FIG. 3, according to one or more embodiments of this disclosure;
FIG. 6 shows a window depicting a life cycle visualization that may be generated using the method of FIG. 3, according to one or more embodiments of this disclosure; and
FIG. 7 illustrates a method for generating a life cycle output, in accordance with embodiments herein.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The drawing figures are not necessarily to scale. Certain features of the embodiments may be shown exaggerated in scale or in somewhat schematic form, and some details of conventional elements may not be shown in the interest of clarity and conciseness. Although one or more embodiments may be preferred, the embodiments disclosed should not be interpreted, or otherwise used, as limiting the scope of the disclosure, including the claims. It is to be fully recognized that the different teachings of the embodiments discussed may be employed separately or in any suitable combination to produce desired results. In addition, one skilled in the art will understand that the description has broad application, and the discussion of any embodiment is meant only to be exemplary of that embodiment, and not intended to intimate that the scope of the disclosure, including the claims, is limited to that embodiment.

When introducing elements of various embodiments of this disclosure, the articles "a," "an," and "the" are intended to mean that there are one or more of the elements. The terms "including" and "having" are used in an open-ended fashion, and thus should be interpreted to mean "including, but not limited to ...." Any use of any form of the terms "couple," or any other term describing an interaction between elements is intended to mean either an indirect or a direct interaction between the elements described.

Certain terms are used throughout the description and claims to refer to particular features or components. As one skilled in the art will appreciate, different persons may refer to the same feature or component by different names. This document does not intend to distinguish between components or features that differ in name but not function, unless specifically stated.

Certain life cycle analysis in the oil and gas industry involves manual data gathering and analysis, leading to a significant investment of time and resources. Further, the oil and gas sector faces challenges in interpreting and integrating diverse data sources related to environmental impact. Accordingly, it is desirable to improve the efficiency of life cycle analysis.

Accordingly, the present disclosure relates to a machine learning (ML) based life cycle analysis techniques that improves the efficiency of life cycle analysis. To do so, the ML based life cycle analysis techniques include utilizing a language model (e.g., a large language model (LLM)) to generate a mapping. The disclosed ML based life cycle analysis techniques reduce time to analyze data related to life cycle analysis by automating, or semi-automating (e.g., with reduced user input), the process, thereby streamlining the generation of life cycle analysis maps. The disclosed techniques may accelerate the assessment but also ensures a more efficient utilization of resources, allowing businesses to focus on strategic decision-making rather than time-consuming data processing. By utilizing natural language processing, the disclosed techniques may eliminate, or substantially reduce, manual data processing, ensuring a more efficient and accurate assessment process. Through the integration of large language models, the disclosed techniques may provide a comprehensive interpretation of environmental impact data. Going beyond numerical values, the disclosed techniques may provide a model that is capable of understanding the intricacies of industry language, providing users with a nuanced understanding of the environmental footprint at each operational stage. Moreover, the disclosed techniques may facilitate improved communication of life cycle analysis by presenting visually intuitive life cycle analysis maps through a user-friendly interface. This visual representation makes it simpler for businesses to articulate their sustainability efforts, aiding in internal decision-making, which may provide a further benefit of establishing a positive reputation with stakeholders.

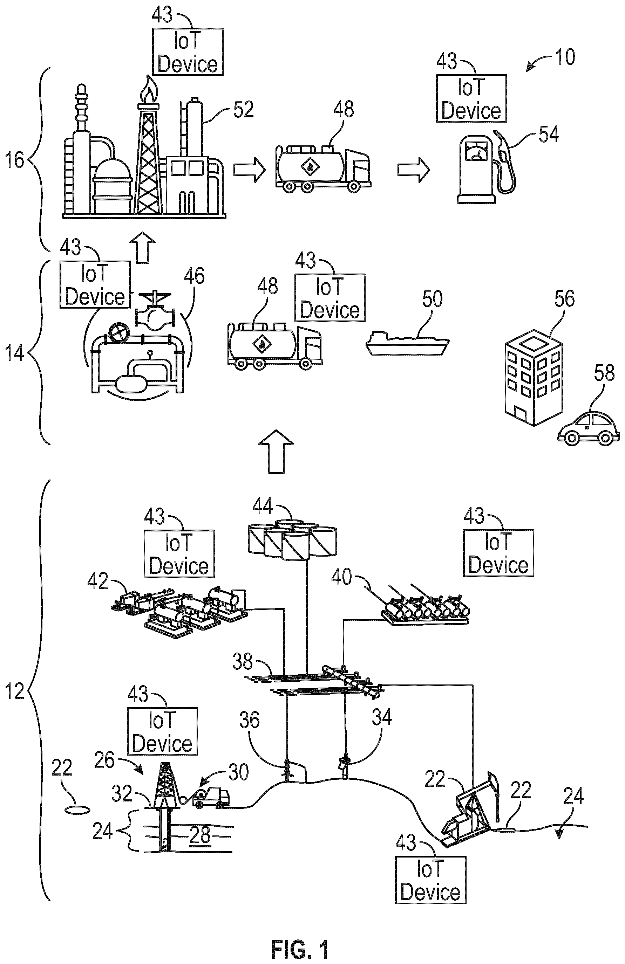

By way of introduction, FIG. 1 illustrates a schematic diagram of an example hydrocarbon production system 10 where hydrocarbon products, such as crude oil and natural gas, may be extracted from the ground, stored, transported, processed, distributed, and the like. The example hydrocarbon production system 10 is provided as an example enterprise that includes a number of different units that coordinate with each other to perform various tasks. For instance, the enterprise may include a collection of equipment, buildings, personnel, raw materials, office buildings, and other components that encompass at least some aspect of the business operations of the enterprise. In the example hydrocarbon production system 10 described below, the enterprise includes all of the processes, employees, operations, buildings, equipment, and other related components that enable the enterprise to produce, transport, and distribute hydrocarbon products.

In the same way, the present embodiments described herein may be applied to other enterprises that provide other products and services and should not be limited the hydrocarbon production system 10 described below. For example, other enterprises may include any type of organizational entity that performs various types of operations for producing products or providing services, such as oil and gas enterprises, mining enterprises, power production enterprises, and the like. Indeed, any other types of enterprises that consume hydrocarbons to produce products or provide services may benefit from the embodiments described herein.

Referring now to FIG. 1, the hydrocarbon production system 10 may generally include an upstream system 12, a midstream system 14, and a downstream system 16. The upstream system 12 may include a number of components and equipment associated with the exploration and production of hydrocarbons. As such, geological survey s that employ seismic sources (e.g., vibrators, air guns), seismic sensors, and other equipment (e.g., fracking trucks) used for hydrocarbon exploration services may be included in the upstream system 12, although not illustrated in FIG. 1.

In addition, the upstream system 12 may include a number of components or facilities that correspond to wells, processing facilities, collection components, distribution networks, and the like. For example, as shown in FIG. 1, the upstream system 12 may include a number of wells 22 disposed within a geological formation 24. The wells 22 may include drilling platform 26 that may have performed a drilling operation to drill out a wellbore 28. Additionally, as used herein, wells 22 may generally refer to physical components such as the drilling platform 26 and wellbore 28 and/or the general area of the reservoir in which extraction is desired (e.g., a reservoir well section). The drilling operations may include drilling the wellbore 28, injecting drilling fluids into the wellbore 28, performing casing operations within the wellbore 28, and the like. In addition to including the drilling platform 26, the upstream system 12 may include surface equipment 30 that may carry out certain operations, such as cement installation operation, well logging operations to detect conditions of the wellbore 28, and the like. As such, the surface equipment 30 may include equipment that store cement slurries, drilling fluids, displacement fluids, spacer fluids, chemical wash fluids, and the like. The surface equipment 30 may include piping and other materials used to transport the various fluids described above into the wellbore 28. The surface equipment 30 may also include pumps and other equipment (e.g., batch mixers, centrifugal pumps, liquid additive metering systems, tanks, etc.) that may fill in the interior of a casing string with the fluids discussed above.

In addition to the equipment used for drilling operations, the upstream system 12 may include a number of well devices that may control the flow of hydrocarbons being extracted from the wells 22. For instance, the well devices in the upstream system 12 may include pumpjacks 32, submersible pumps 34, well trees 36, and the like. The pumpjacks 32 may mechanically lift hydrocarbons (e.g., oil) out of the well 22 when a bottom hole pressure of the well 22 is not sufficient to extract the hydrocarbons to the surface. The submersible pump 34 may be an assembly that may be submerged in a hydrocarbon liquid that may be pumped. As such, the submersible pump 34 may include a hermetically sealed motor, such that liquids may not penetrate the seal into the motor. Further, the hermetically sealed motor may push hydrocarbons from underground areas or the reservoir to the surface. The well trees 36 may be an assembly of valves, spools, and fittings used for natural flowing wells. As such, the well trees 36 may be used for an oil well, gas well, water injection well, water disposal well, gas injection well, condensate well, and the like. By way of reference, the wells 22 may be part of a first hierarchical level and the well devices that extract hydrocarbons from the wells 22 may be part of a second hierarchical level above the first hierarchical level.

After the hydrocarbons are extracted from the surface via the well devices, the extracted hydrocarbons may be distributed to other devices via a network of pipelines 38. That is, the well devices of the upstream system 12 may be connected together via a network of pipelines 38. In addition to the well devices described above, the network of pipelines 38 may be connected to other collecting or gathering components, such as wellhead distribution manifolds 40, separators 42, storage tanks 44, and the like.

In some embodiments, the pumpjacks 32, the submersible pumps 34, well trees 36, wellhead distribution manifolds 40, separators 42, and storage tanks 44 may be connected together via the network of pipelines 38. The wellhead distribution manifolds 40 may collect the hydrocarbons that may have been extracted by the pumpjacks 32, the submersible pumps 34, and the well trees 36, such that the collected hydrocarbons may be routed to various hydrocarbon processing or storage areas in the upstream system 12, the midstream system 14, or the downstream system 16. The separator 42 may include a pressure vessel that may separate well fluids produced from oil and gas wells into separate gas and liquid components. For example, the separator 42 may separate hydrocarbons extracted by the pumpjacks 32, the submersible pumps 34, or the well trees 36 into oil components, gas components, and water components. After the hydrocarbons have been separated, each separated component may be stored in a particular storage tank 44. The hydrocarbons stored in the storage tanks 44 may be transported via the pipelines 38 to transport vehicles, refineries, and the like.

In addition to the components described above, internet-of-things (IoT) devices 43 may be distributed throughout the upstream system 12, the midstream system 14, and the downstream system 16 and may collect information, perform analysis on data, send data related to a respective component or parameters (e.g., temperature, flow) of a component to a computing system or the like. By way of example, the IoT device may include sensors, actuators, machines, or other equipment that may include a processor that execute computer instructions and performs certain tasks including collecting data, processing data, and communicating data over a network.

Although the hydrocarbon production system 10 is described above with certain components, it should be understood that the hydrocarbon production system 10 may include additional, fewer, or different components. For example, although discussed above in relation to the hydrocarbon production system 10 on land, present embodiments may also off-shore hydrocarbon sites.

After extracting, transporting, and storing the hydrocarbons in the upstream system 12, the hydrocarbons may be transported and stored in the midstream system 14. The midstream system 14 may thus include pipeline infrastructure 60 that may move the extracted hydrocarbons across certain terrains and geographic locations to facilities to process, refine, or store the hydrocarbons. The pipeline infrastructure 60 may include similar devices as described in the upstream system 12 such as the separators 42 and storage tanks 44, as well as other components that may assist in moving the hydrocarbons long distances, such as pumping stations, tank trucks 48, rail tank cars, barges 50, and the like. The IoT devices 44 may thus track the flow of the hydrocarbons, the valves for directing the hydrocarbons within the pipelines, the locations of the vehicles used to transport the hydrocarbons, and the like. In some embodiments, the IoT devices 44 may include autonomous control systems to control the operations of the vehicles transporting the hydrocarbons.

The downstream system 16 may include components that may convert the transported hydrocarbons into final petroleum or gas products. The operations performed by the downstream system 16 may include refining the hydrocarbons into different products such as gasoline, diesel, oils, lubricants, petrochemicals, and the like. As such, the downstream system 16 may include a refinery system 52 for processing the hydrocarbons. By way of example, the refinery system 52 may include distillation towers to separate the hydrocarbons, heat exchangers to transfer heat between different fluids, pumps used to move fluids, reactors to perform chemical reactions for processing the hydrocarbons, separators 42, compressors, storage tanks, and the like. After the hydrocarbons are converted into hydrocarbon products, they may be transported to other locations for distribution via tank trucks 48 or other suitable distribution mechanisms. For instance, the hydrocarbon products (e.g., gasoline) may be distributed to a fuel station to distribute fuel to consumers via a gas pump 54.

In addition to the upstream system 12, the midstream system 14, and the downstream system 16, the enterprise may include buildings 56, vehicles 58, and other objects that are owned, leased, or operated by an organization. These tangential or supplemental objects may be involved in the planning, marketing, accounting, and supplementary business aspects for commercializing the hydrocarbon production system 10. Although only the buildings 56 and vehicles 58 are depicted as supplementary objects associated with the enterprise in FIG. 1, it should be understood that other supplementary objects may also be considered part of the enterprise.

Each of the components and subsystems of enterprise described above (e.g., the upstream system 12, the midstream system 14, the downstream system 16, an office 56, and so forth) involves the consumption of resources such as energy and water. Further, these systems also produce a certain amount of waste GHG emissions while performing their respective operations. The resource, waste, and emission amounts vary for different portions of each respective system, but the aggregated resource, waste, and emission amounts may include a planning phase (e.g., within building 56), a construction phase, an operation phase, a decommissioning phase, and the like. In addition, each of these phases at each system level (e.g., upstream, midstream, downstream, office) produces GHG emissions such as carbon dioxide, methane, and the like. The resources, waste, GHG emissions, and other byproducts consumed and produced during these operations may be referred to as sustainability parameters. Enterprises may generally move to improve sustainability parameters by focusing on one or more of increasing energy efficiencies, reducing water usage, curbing GHG emissions, decreasing waste amounts, and the like. The sustainability parameters may be interdependent with each other and the enterprise may reduce the environmental impacts of their operations by coordinating their operations to improve the aggregate sustainability parameters across the enterprise. As shown in FIG. 1, any type of enterprise may involve a diverse group of equipment, processes, structures, and the like. In accordance with the embodiments described herein, a sustainability platform system may track and monitor sustainability parameters across the variety of levels, operations, and aspects of the enterprise to provide sustainability action plans to revise enterprise operations and structures to improve sustainability parameters. Indeed, as more industries move to achieve net zero compliance in which the enterprise achieves a balance between the amount of GHG emissions produced by the enterprise operations and removed from the atmosphere.

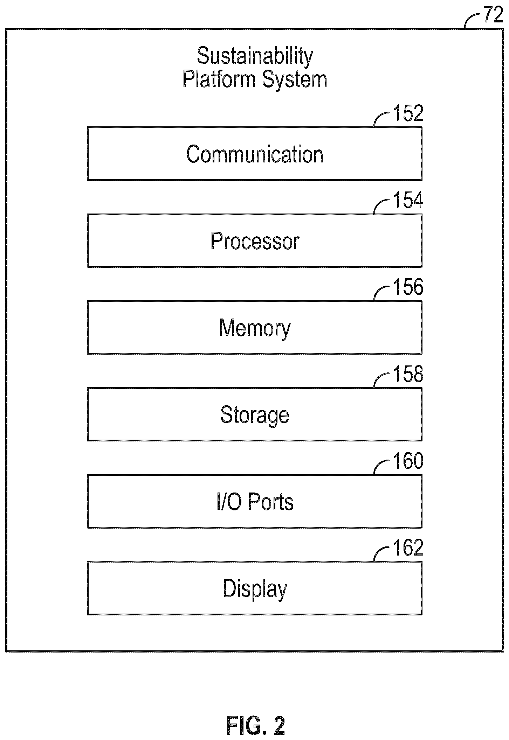

To perform the operations described herein, the sustainability platform system 72 may include a number of components to assist in processing, analyzing, collecting, and communicating data in accordance with the presently disclosed embodiments. With this in mind, FIG. 2 illustrates example components of the sustainability platform system 72. As shown in FIG. 2, the sustainability platform system 72 may include a communication component 152, a processor 154, a memory 156, a storage component 158, input/output (I/O) ports 160, a display 162, and the like. The communication component 152 may be a wireless or wired communication component that may facilitate communication between different monitoring systems, gateway communication devices, various control systems, and the like. The processor 154 may be any type of computer processor or microprocessor capable of executing computer-executable code. The memory 156 and the storage component 158 may be any suitable articles of manufacture that can serve as media to store processor-executable code, data, or the like. These articles of manufacture may represent non-transitory computer-readable media (i.e., any suitable form of memory or storage) that may store the processor-executable code used by the processor 154 to perform the presently disclosed techniques. The memory 156 and the storage component 158 may also be used to store data received via the I/O ports 160, data analyzed by the processor 154, or the like.

The I/O ports 160 may be interfaces that couple to various types of I/O modules such as sensors, programmable logic controllers (PLC), and other types of equipment. For example, the I/O ports 160 may serve as an interface to pressure sensors, flow sensors, temperature sensors, and the like. As such, the planning system 150 may receive data associated with a well via the I/O ports 160. The I/O ports 160 may also serve as an interface to enable the planning system 150 to connect and communicate with surface instrumentation, servers, and the like.

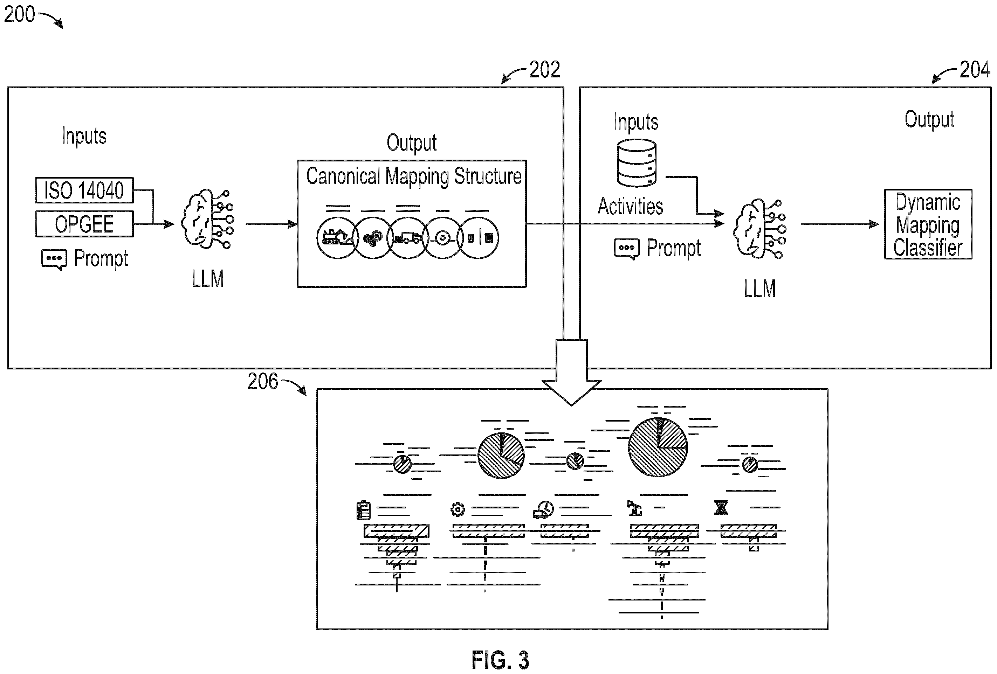

The display 162 may include any type of electronic display such as a liquid crystal display, a light-emitting-diode display, and the like. As such, data acquired via the I/O ports and/or data analyzed by the processor 154 may be presented on the display 162, such that the planning system 150 may present designs for hydrocarbon sites 10 for view. In certain embodiments, the display 162 may be a touch screen display or any other type of display capable of receiving inputs from an operator. Although the sustainability platform system 72 is described as including the components presented in FIG. 3, the sustainability platform system 72 should not be limited to including the components listed in FIG. 3. Indeed, the sustainability platform system 72 may include additional or fewer components than described above.

With the foregoing in mind, FIG. 3 illustrates a method 200 for generating a visualization (e.g., a life cycle dashboard visualization, a life cycle visualization, a value chain visualization) in accordance with embodiments presented herein. Although the following description of the method 2200 is described as being performed by the sustainability platform system 72 and in a particular order, it should be understood that any suitable computing system with access to the appropriate data sources and engineering workflow systems may perform the method 200 in any suitable order.

As shown, the method 200 includes three blocks 202, 204, 206. In general, FIG. 3 illustrates the three phases (e.g., blocks 202, 204, and 206) of the workflow in accordance with the disclosed techniques. For example, block 202 includes using an LLM structure generator, which uses inputs that include life cycle analysis (LCA) data, such as ISO 14040 and OPGEE and generates a canonical mapping structure based on the input prompt. It is noted that ISO 14040 is a standard that describes how to perform LCA analysis, and is industry agnostic. OPGEE is a calculation methodology developed by Stanford specifically for the oil and gas value chain, and splits activities by the phases of oil production.

Block 204 includes using inputs from spent or equivalent carbon emissions mapping activities (e.g., activity data as described herein) in a database. Further, block 204 may include receiving, as an input, a prompt that provides words or phrases that may be used to teach an LLM model how to map activities to classes generated in block 202. A non-exclusive list of these activities may include manufacturing, transportation, delivery service, performing a fracturing treatment, well testing, selling a tool/product/chemicals, and so forth.

Block 206 includes generating the life cycle visualization in a dashboard using plots, such as Tornado plots or Sankey diagrams, that may be employed to visualize the consumption of carbon emissions or other greenhouse gases (GHG) in different stages of life cycle. Each of block 202, 204, and 206 are described in more detail below.

At block 202, the sustainability platform system 72 generates a mapping structure based on LCA data. In general, the LCA data may indicate a format or type of data according to one or more environmental management standards, such as International Organization for Standardization (ISO) 14040. As shown, the sustainability platform system 72 receives a prompt, ISO 14040, and OPGEE. It should be noted that these are meant to be non-limiting examples of queries, industry standard organization, and organization-specific information, respectively. In general, the LLM illustrated in block 202 is configured to generate a canonical mapping structure that is generalized to industry standards and generalized LCA data.

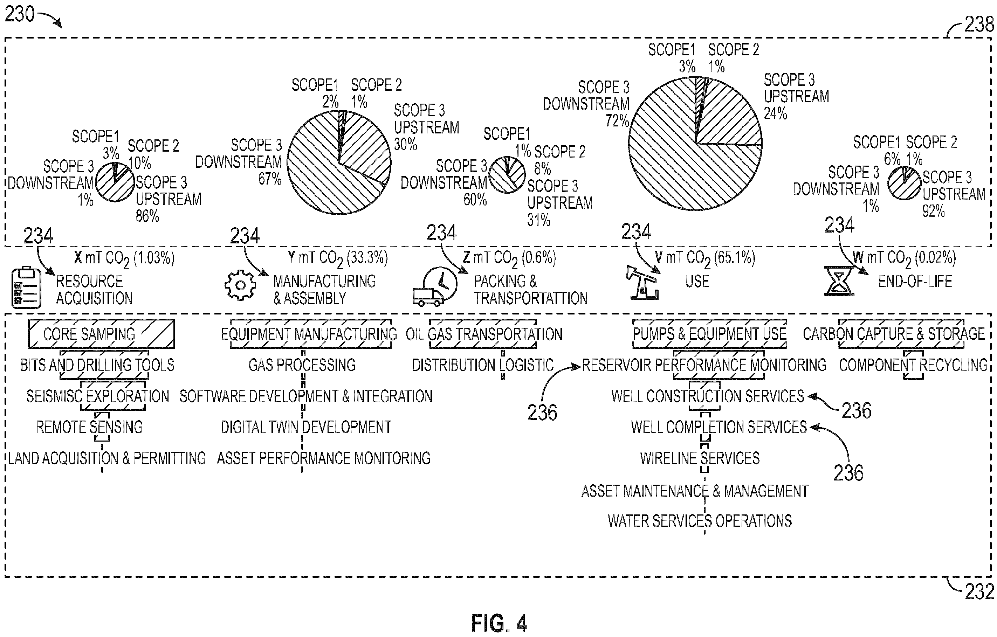

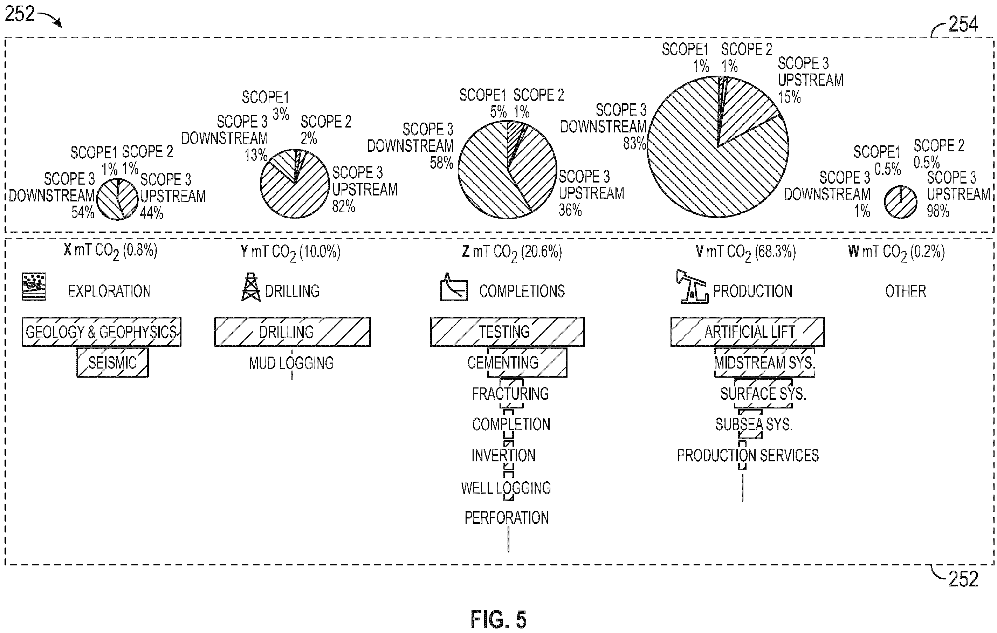

In some embodiments, the prompt includes reference queries (e.g., previous queries provided to the LLM) or a new query (e.g., prompt) submitted by a user. For example, the query may be a request for information such as "please provide a life cycle analysis for manufacturing product X". Further, as shown, the sustainability platform system 72 receives ISO 14040 and OPGEE. In general, ISO 14040 provides an indication of classes related to a particular industry standard organization relating to LCA of GHG emissions. OPGEE is generally a non-limiting example of organization-specific information that indicates relevant information for a particular organization, industry, enterprise, and the like, used for value chain analysis. It is presently recognized that OPGEE for an oil and gas enterprise may indicate emissions for different operations performed by an oil and gas enterprise. Further, OPGEE may indicate subclasses that may provide more granular, as well as organization specific, as compared to ISO 14040. In this way, the sustainability platform system 72 may generate a mapping structure that includes classes related to the ISO 14040 and corresponding subclasses for each class. Example classes and subclasses are shown in FIGS. 4 and 5.

At block 204, the sustainability platform system 72 generates a dynamic mapping classifier based on activity data (e.g., activities) and the mapping structure. The activity data generally include operations performed by an enterprise and/or information related to such operations (e.g., otherwise indicating operations performed). For example, a non-exhaustive list of the activity data may include throughput of a product, transportation information, financial information, and the like. Accordingly, the sustainability platform 72, utilizing the mapping structure generated at block 202, may organize the activity data into different classes and subclasses, thereby facilitating a dynamic mapping of the activity data. As referred to herein, a "dynamic" mapping classifier refers to the LLM determining a correct class for activity data without being provided examples (e.g., via supervised learning). For example, the LLM may learn the correct class by natural language machine inference via correlation. At least in some instances, this process is prompt driven (e.g., performed in response to receiving the prompt or identifying certain terms in the prompt). That is, phase #1 (e.g., block 202) generates classes and subcategories in response to, subsequent to, or based on the received prompt. In turn, the mapping classifiers are fed into a runtime and the LLM performs the mapping without taking the model down every time. In general, in contrast to the LLM illustrated in block 202, which is configured to generate a canonical mapping structure that is generalized to industry standards and generalized LCA data, the LLM illustrated in block 204 is configured to be trained based on input data that is specific (e.g., organization specific) to particular enterprises (e.g., particular companies, particular divisions of companies, particular processing or manufacturing plants, particular worksites, and so forth).

A specific, non-limiting implementation of block 204 includes feeding (e.g., providing as input) the structure containing the classes of block 202 as at least one input. An additional input includes a "Few Shot Learning" prompt, the prompt hints LLM model how to map activities to the structure generated in block 202, thereby acting as a classifier. For an on-premise solution, one technique includes training a downstream bidirectional encoder representation from transformer (BERT) model (deep learning neural network) using categorical cross entropy loss some synthetic examples of classes and activity mapping, this process is manual and should be employed as an alternative to LLM in resource constrained environments. It should be noted that, block 202 and 204 may refer to a concept "Generator-Mapper" architecture. This is a new two-phase design pattern that leverages power of LLM's to solve critical business problems.

It should be noted that, because the input data received at block 204 is specific to particular enterprises, the data (e.g., activity data) being received from these particular enterprises may exist in vastly different data formats and may have different naming conventions. As such, in certain embodiments, the processing of the input data at block 204 may include converting the data (e.g., the activity data) from the myriad different data formats and naming conventions to ensure that the LLM can property analyze the input data to create the canonical mapping structure.

At block 206, the sustainability platform system 72 generates a life cycle output. In general, the life cycle output may include a life cycle visualization, a value chain visualization, or a combination thereof that is displayed on a dashboard. For example, the life cycle output may be capable of causing a display to display the life cycle visualization, the value chain visualization, or both, on the display.

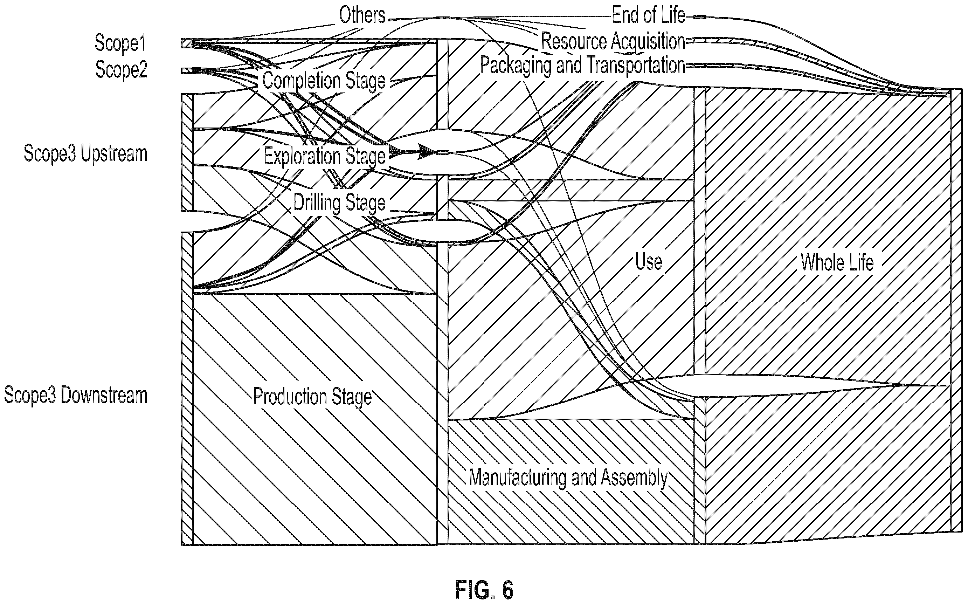

In some embodiments, the life cycle output may include a Tornado plot (e.g., in embodiments directed to carbon emissions) or a Sankey diagram (e.g., in embodiments related to carbon emissions flow). Non-limiting examples of Tornado plots are shown in FIGS. 4 and 5, and a non-limiting example of a Sankey diagram is shown in FIG. 6. In embodiments where the life cycle visualization is a Tornado plot, the classes may include a resource acquisition class, a manufacturing and assembly class, a packaging and transportation class, a use class, an end-of-life class, or a combination thereof. In embodiments when the life cycle output includes a value chain visualization, the classes may include an exploration class, a drilling class, a completions class, or a combination thereof.

FIG. 4 shows a window 230 that includes a Tornado plot related to a life cycle visualization. The life cycle visualization may be displayed on a dashboard and be capable of selectively displaying portions of the associated data, described in more detail below. As shown, the window 230 displays multiple tornado plots 323 for multiple classes 234 (e.g., resource acquisition, manufacturing & assembly, packing & transposition, use, and end-of-life). In general, each of the depicted classes 234 within the life cycle visualization may correspond to a particular industry standard organization. For example, the depicted classes 234 may correspond to ISO 14040, however this is meant to be a non-limiting example, and the classes may correspond to other industry standard organizations related to other life cycle assessment of greenhouse gas emissions.

Further, the window 230 includes subclasses 236 (e.g., a few are labeled for simplicity) that are displayed under each class. In general, each subclass may correspond to a particular operational type, such as OPGEE. Accordingly, the sustainability platform system 72 may determine which classes and subclasses to display on a dashboard based on inputs including ISO 14040 and OGPEE (e.g., or other industry standard organizations), as shown in FIG. 3.

Further still, the window 230 includes a breakdown visualization section 238 (e.g., the pie charts). In general, the breakdown visualization section 238 may indicate LCA that is specific to the organization. For example, and as shown, the breakdown visualization section 238 indicates LCA for upstream operations, downstream operations, and the like. As shown, the window 230 includes a breakdown visualization (e.g., a pie chart) for each of the classes. It should be noted that this type of visualization may provide insights into carbon emissions breakdown. Note that scopes of carbon emission may be double counted in accounting. For example, someone's Scope 1 emission might be someone else's Scope 3 emission, by explicitly demarking the double count in the visualization clients indicate which carbon emission may the supplier / consumer account for in their calculations. Moreover, the visualizations being generated may helping enterprises to visualize the most carbon emissions intensive parts of the value chain and focus our efforts on decarbonization of those. Decarbonization actions will also depend on the scope of emission - Scope 1, Scope 2, or Scope 3 - direct or indirect control.

As shown, the breakdown visualization and the information corresponding to the classes are organized (e.g., spatially arranged or organized) based on classes, carbon emissions, or both. That is, the sustainability platform system 72 may determine positions or areas to display the breakdown visualization and the information corresponding to the classes. For example, the sustainability platform system 72 may spatially arrange subclasses under the classes based on a contribution or weight to an amount of GHG emissions produced. Further, the sustainability platform system 72 may determine an area or size of the breakdown visualizations based on the relative contributions to GHG emissions produced for each of the classes, a resolution of a display on a device such that each breakdown visualization in the breakdown visualization 238 may be displayed. For example, as shown, the activities corresponding to the manufacturing & assembly class produce relatively more CO₂ than the activities corresponding to the resource acquisition class. As such, the sustainability platform system 72 may display the breakdown visualization corresponding to the manufacturing and assembly class such that it is larger than the breakdown visualization corresponding to the resource acquisition class. In this way, the information conveyed by the visualization dashboard may be more readily discerned by a user by providing visual cues that indicate quantitative information. Accordingly, the disclosed techniques may aid employees for an enterprise to match specific company data to the industrial average models/data with suitable detail and visualization to indicate trends.

FIG. 5 shows a window 250 that includes a Tornado plot related to a value chain visualization. In particular, the window 250 includes a value chain view of carbon emissions resulting from one or more operations of one or more enterprises. The window 252 displays generally similar types of information as shown in FIG. 4. For example, the window 250 includes tornado plots 252 and a breakdown visualization section 254. In FIG. 5, the breakdown visualizations (e.g., the pie charts) of the breakdown visualization section 254 are spatially arranged in order of carbon emissions, with larger carbon emissions being provided within the center of the window 252. Providing the breakdown visualizations in the center of the window 252 may aid a user in making decisions related to carbon emissions because they may be presented with operations whether addressing greenhouse gas emissions may make the largest changes.

As such, this arrangement may aid an employee in determining a particular operation where adjusting or otherwise addressing carbon emissions may provide a relatively larger impact. To present this arrangement, the sustainability platform system 72 may cal culate carbon emissions using activity data as described herein. Then, the sustainability platform system 72 may determine a ranking of carbon emissions for operations that are to be displayed. Then, the sustainability platform system 72 may determine locations within a window to display visualizations (e.g., the pie charts, the tornado plots, and the like) based on the ranking of carbon emissions. In this way, the sustainability platform system 72 may dynamically determine how to present life cycle visualizations based on calculated carbon emissions for various operations.

FIG. 6 shows a window 300 that includes a life cycle visualization. In particular, the window 300 includes an example of Sankey diagram i.e. how carbon emissions transition from Scopes to various lifecycle stages, contrary to figure above which showed static view of carbon emissions that is carbon embodiments, Sankey diagrams highlight "Flow" of carbon emissions. The Sankey diagram is another example of a life cycle visualization that may be generated using the disclosed techniques. As shown, the Sankey diagram shows the amount of carbon emissions for various operations and, thus, informs a user of potential areas where addressing carbon emissions may make a greater impact.

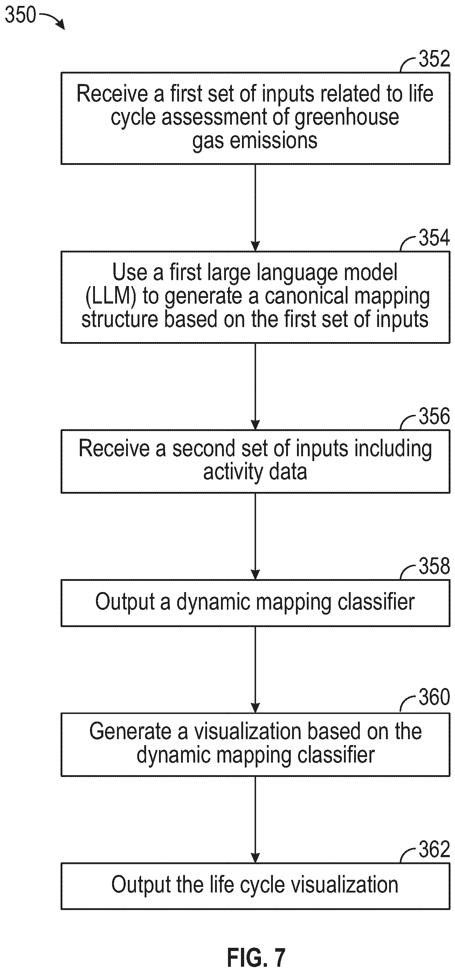

With the foregoing in mind, FIG. 7 illustrates a method 350 for generating and presenting a life cycle visualization in accordance with embodiments presented herein. Although the following description of the method 350 is described as being performed by the sustainability platform system 72 and in a particular order, it should be understood that any suitable computing system with access to the appropriate data sources and engineering workflow systems may perform the method 350 in any suitable order.

Referring to FIG. 7, at block 352, the sustainability platform system 72 receives inputs from one or more industry standard organizations. In general, the first set of inputs relate to a LCA of GHG emissions. In some embodiments, the first set of inputs may include a prompt and/or organization-specific information, as described in more detail with respect to FIG. 3.

At block 354, the sustainability platform system 72 generates a canonical mapping structure using a large language model (e.g., a first LLM). In general, the canonical mapping maps indicates a relationship between certain activities and classes and/or subclasses. As described herein, the sustainability platform system 72 may determine the classes for the canonical mapping based on the industry standard organizations. Further, the sustainability platform system 72 may determine the subclasses for the canonical mapping based on the organization-specific information.

At block 356, the sustainability platform system 72 receives a second set of inputs from one or more industrial organizations. In general, the second set of inputs may include activity data corresponding to oil and gas operations. For example, the activity data may include transportation information (e.g., transportation distances, vehicles used to transport a good, a number of vehicles user to transport the good, and other information related to the shipping, transportation), manufacturing information (e.g., power consumption data), and the like.

At block 358, the sustainability platform system 72 outputs a dynamic mapping classifier using the second set of inputs and canonical mapping structure (e.g., generated by the first LLM, the second LLM, or both). At block 360, the sustainability platform system 72 generates a life cycle visualization dashboard of the outputs from the dynamic mapping classifier. The dynamic mapping classifier classifies activity data into different classes. This classification, together with determined carbon emissions or other GHG emissions, provides a GHG emission for each class 234 (FIG. 4). As such, this display of information may aid a user in seeing GHG emissions across various operations performed by an organization. As described in FIGS. 4-6, the life cycle visualization or value chain visualization may include a Tornado plot, Sankey diagram, or a combination thereof. At block 362, the sustainability platform system 72 outputs or presents the life cycle output.

Accordingly, the present disclosure relates to ML based life cycle analysis techniques. Technical effects of the disclosure include improved efficiency of analyzing data related to life cycle analysis, such as by automating life cycle analysis, providing comprehensive data interpretation, and enhanced communication of environmental impact. For example, conventional life cycle analysis in the oil and gas industry involves manual data gathering and analysis, leading to a significant investment of time and resources. The disclosed techniques may provide automation of the life cycle analysis process, thereby streamlining the generation of life cycle analysis maps. This automation may not only accelerate the assessment but also ensures a more efficient utilization of resources, allowing businesses to focus on strategic decision-making rather than time-consuming data processing. Further, it is presently recognized that the oil and gas sector faces challenges in interpreting and integrating diverse data sources related to environmental impact. The disclosed techniques address this need by employing large language models to interpret and analyze complex industry-specific language. This may provide a more comprehensive understanding of the data, going beyond numerical values to provide nuanced insights. The invention facilitates better decision-making by empowering users with a deeper comprehension of their environmental impact. Further still, it is presently recognized that businesses often struggle to effectively communicate their environmental efforts and impact to stakeholders. The disclosed techniques address this unmet need by providing a clear and visual representation of the life cycle analysis. This not only aids in internal decision-making but also facilitates transparent communication with regulatory bodies, investors, customers, and the broader community.

Compared to existing techniques in life cycle analysis, the disclosed techniques leverage LLM and improve user experience with its intuitive interface and seamless integration capabilities. Traditional tools may lack user-friendly features, making it challenging for stakeholders to interpret and utilize the generated data effectively. The disclosed techniques interface simplifies the presentation of life cycle analysis maps, making the insights more accessible and actionable for decision-makers. Further, the disclosed techniques provide a holistic approach to environmental impact assessment. It covers the entire life cycle of oil and gas products and services, offering insights at every operational stage. This contrasts with certain existing technologies that may focus on specific aspects of the life cycle, potentially missing key opportunities for optimization or emission reduction.

Although described in the context of life cycle analysis, it should be noted that the disclosed techniques for analyzing different data types using both LLM and ML may be applied to other applications. For example, the disclosed techniques may be utilized for Oil and Gas Industry Optimization. That is, the disclosed techniques provide direct application in the oil and gas industry by optimizing operations, minimizing environmental impact, and enhancing overall sustainability. It aids in decision-making at various stages, from exploration to distribution, offering valuable insights for resource efficiency and emission reduction. Further, the disclosed techniques may be utilized for Regulatory Compliance and Reporting. That is, the disclosed techniques support organizations in meeting regulatory compliance requirements by providing comprehensive life cycle analysis data. It serves as a valuable tool for transparent reporting, helping businesses demonstrate adherence to environmental standards and fulfill disclosure obligations.

Additionally, the disclosed techniques may be utilized for Corporate Sustainability Initiatives. Businesses can use the disclosed techniques to bolster their corporate sustainability initiatives by identifying areas for improvement and implementing targeted strategies to reduce carbon footprints. The invention contributes to the broader goal of aligning organizations with environmentally responsible practices.

### Possible Future Uses and Alternative Approaches:

Expansion to Other Industries: The principles behind the disclosed techniques can be extended to other industries beyond oil and gas, such as manufacturing, transportation, or agriculture. Adapting the technology to different sectors would involve tailoring the language models and data sources to the specific environmental considerations of those industries.

Integration with IoT and Sensor Data: The disclosed techniques could incorporate real-time data from IoT devices and sensors. This integration would enhance the accuracy and timeliness of environmental impact assessments, providing even more dynamic insights into carbon footprints and enabling proactive decision-making.

Global Supply Chain Sustainability: The disclosed techniques could be applied to assess the environmental impact of global supply chains. By analyzing the life cycle of products throughout the supply chain, businesses can make informed decisions to minimize carbon footprints and promote sustainable sourcing and manufacturing practices.

Reference throughout this specification to "one embodiment," "an embodiment," "embodiments," "some embodiments," "certain embodiments," or similar language means that a particular feature, structure, or characteristic described in connection with the embodiment may be included in at least one embodiment of this disclosure. Thus, these phrases or similar language throughout this specification may, but do not necessarily, all refer to the same embodiment. Although this disclosure has been described with respect to specific details, it is not intended that such details should be regarded as limitations on the scope of this disclosure, except to the extent that they are included in the accompanying claims.

Additionally, the methods and processes described above may be performed by a processor. Moreover, the term "processor" should not be construed to limit the embodiments disclosed herein to any particular device type or system. The processor may include a computer system. The computer system may also include a computer processor (e.g., a microprocessor, microcontroller, digital signal processor, or general-purpose computer) for executing any of the methods and processes described above.

The computer system may further include a memory such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

Some of the methods and processes described above, can be implemented as computer program logic for use with the computer processor. The computer program logic may be embodied in various forms, including a source code form or a computer executable form. Source code may include a series of computer program instructions in a vari ety of programming languages (e.g., an object code, an assembly language, or a high-level language such as C, C++, or JAVA). Such computer instructions can be stored in a non-transitory computer readable medium (e.g., memory) and executed by the computer processor. The computer instructions may be distributed in any form as a removable storage medium with accompanying printed or electronic documentation (e.g., shrink wrapped software), preloaded with a computer system (e.g., on system ROM or fixed disk), or distributed from a server or electronic bulletin board over a communication system (e.g., the Internet or World Wide Web).

Alternatively or additionally, the processor may include discrete electronic components coupled to a printed circuit board, integrated circuitry (e.g., Application Specific Integrated Circuits (ASIC)), and/or programmable logic devices (e.g., a Field Programmable Gate Arrays (FPGA)). Any of the methods and processes described above can be implemented using such logic devices.

While the embodiments set forth in this disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [performing [a function]... " or "step for [performing [a function] ... ", it is intended that such elements are to be interpreted under 35 U.S.C. 112(f). However, for any claims containing elements designated in any other manner, it is intended that such elements are not to be interpreted under 35 U.S.C. 112(f).

## Claims

1. A method, comprising:
receiving a first set of inputs from one or more industry standard organizations, wherein the first set of inputs comprise data relating to life cycle assessment (LCA) of greenhouse gas (GHG) emissions;
using a first large language model (LLM) to generate a canonical mapping structure based on the first set of inputs;
receiving a second set of inputs from one or more industrial organizations, wherein the second set of inputs comprise activity data relating to one or more industrial activities performed by the one or more industrial organizations;
using a second LLM to output a dynamic mapping classifier based on the second set of inputs and the canonical mapping structure generated by the first LLM; and
generating and presenting a visualization dashboard of outputs from the dynamic mapping classifier.

2. The method of claim 1, wherein presenting the visualization dashboard comprises:
determining an amount of GHG emissions for a plurality of classes corresponding to the one or more industry standard organizations; and
generating a breakdown visualization for the plurality of classes based on the amount of GHG emissions and/or
spatially arranging the outputs from the dynamic mapping class based on classes corresponding to the one or more industry standard organizations.

3. The method of claim 2, where generating the breakdown visualization comprises determining relative sizes of the breakdown visualization for the plurality of classes based on the amount of GHG emissions for the plurality of classes.

4. The method of any one of the preceding claims, wherein the first set of inputs comprise organization specific information and/or
wherein the first set of inputs comprise a request for information relating to a product, and wherein the visualization dashboard indicates GHG emissions for a plurality of operations related to the product,
wherein the one or more industry standard organizations preferably indicate the plurality of operations that generate the GHG emissions.

5. A system, comprising
one or more processors configured to:
perform a method according to any one of the preceding claims.

6. The system of claim 5, wherein the one or more processors are configured to:
determine GHG emission vales based on the activity data; and
generate the visualization based on the GHG emission values.

7. The system of claim 6, wherein the one or more processors are configured to generate the visualization based on the GHG emission values by:
determining relative sizes of the visualization for the one or more industrial activities based on the GHG emission values; and
generating the visualization based on the relative sizes and/or
determining an arrangement of the visualization for the one or more industrial activities based on the GHG emission values; and
generating the visualization based on the arrangement.

8. The system of any one of the preceding claims 5-7, wherein the visualization dashboard displays a plurality of tornado plots corresponding to the activity data.

9. The system of any one of the preceding claims 5-8, wherein the one or more processors are configured to generate the visualization based on a resolution size of a display that will display the visualization.

10. The system of any one of the preceding claims 5-9, wherein the dynamic mapping classifier is configured to map the activity data to at least one of throughput of a product, transportation information, or financial information.

11. The system of any one of the preceding claims 5 - 10, wherein the one or more processors are configured to receive the first set of inputs based on a user submitted prompt.

12. A non-transitory computer-readable medium comprising computer-executable instructions that, when executed, are configured to cause a processing system to perform operations comprising a method according to any one of the claims 1 - 4.

13. The non-transitory computer-readable medium of claim 12, wherein the one or more industry standard organizations comprise ISO 14040 or OPGEE.

14. The non-transitory computer-readable medium of claim 12 or 13, wherein the dynamic classifier is configured to categorize the second set of inputs as one industrial activity of the one or more industrial activities.

15. The non-transitory computer-readable medium of claim 12, 13 or 14, wherein instructions, when executed by the processing system, are configured to cause the processing system to:
determine GHG emission vales based on the activity data; and
wherein the processing system is configured to generate the visualization based on the GHG emission values.
